# EUROPEAN PATENT APPLICATION

(11) **EP 1 085 321 A1**
(43) Date of publication of application: **21.03.2001**
(21) Application number: 00420185.1
(22) Date of filing: 31.08.2000
(51) Int. Cl.: G01N 27/48

(54) **Device for the automatic measurement of developing agent concentration**

(30) Priority: 13.09.1999 FR 9911551
(71) Applicant: EASTMAN KODAK COMPANY, Rochester, New York 14650 (US)
(72) Inventor: Lemoine, Michel Marie-René Clotaire, 71102 Chalon sur Saone Cedex (FR); Roussilhe, Jacques, Kodak Industrie, 71102 Chalon sur Saone Cedex (FR); Monin, Karine Sophie Kodak Industrie, 71102 Chalon sur Saone Cedex (FR)
(74) Representative: Leray, Noelle

(57) **Abstract**

The present invention relates to the automatic measurement of developing agent concentration in a solution using a three-electrode cell.

The device comprises:
a signal generator (10) capable of generating at least one voltage gradient intended to supply the three-electrode cell (30);
a capturing device (40) of the signal representative of the amperage measured at the terminals of the three-electrode cell (30) according to the voltage applied to its terminals;
a microprocessor (50) provided to compare successively one with another the values captured by the capturing device (40) throughout the duration of the gradient.

## Description

### FIELD OF THE INVENTION

The present invention relates to the automatic measurement of developing agent concentration in a solution, and particularly a device for the automatic measurement of developing agent concentration in a developer bath.

### BACKGROUND OF THE INVENTION

Photographic film developer baths include developing agents that are reducing compounds. As it is utilized, the developer bath becomes depleted of developing agent because of its development (oxidation-reduction reaction), and also because of aerial oxidation. This reduction of concentration of developing agent causes a reduction of bath activity. In order to maintain bath activity, the bath must be regularly replenished so as not to alter the quality of the developed products. However, it is desirable to replenish it to compensate solely for the variation of developing agent concentration and limit the volume of waste. Thus, regular and fast measurement of the developing agent concentration in developer baths is required.

There are processes for measuring developing agent concentration that comprise utilizing a "voltamperometric" method. Three electrode cells are utilized to take measurements; they comprise three electrodes that are not fixed in relation to one another. The operator who takes the measurement has to arrange the electrodes one in relation to another in a position that enables a correct measurement. A problem found in this utilization is that the variation in position of the electrodes one in relation to another causes measurement variations. Another problem found with this type of cell is that the measurement cannot be done directly in the solution containing the developing agents. The solution is sampled and introduced into the cell. The reaction continues to take place while the solution is sampled and introduced into the cell. The measurement then made in the cell does not accurately give the concentration of developing agent in the development bath. Further, aerial oxidation could have occurred during the sampling.

On the other hand, processes for measuring the concentration of developing agents that comprise using a voltamperometric method utilize costly apparatuses that additionally require operators to know about the chemical reactions taking place in the developing bath and a certain number of adjustments.

### SUMMARY OF THE INVENTION

An object of the invention is to develop a device for measuring the concentration of a developing agent that does not have the disadvantages described above and particularly a portable easy-to-use device, that is accurate and low cost.

The present invention relates to a device for automatically measuring the concentration of a developing agent in a solution by means of a three-electrode cell. The device comprises a signal generator for generating at least one voltage gradient provided to supply the three-electrode cell, a capturing device provided to capture a signal representing the amperage measured at the three-electrode cell terminals according to a voltage applied to its terminals, and a microprocessor provided to compare successively one with another the values captured by the capturing device throughout the duration of the gradient.

### BRIEF DESCRIPTION OF THE DRAWINGS

Other characteristics will appear on reading the description that follows, with reference to the drawings wherein:
Figure 1 represents one embodiment of the three-electrode cell utilized in the present invention;
Figure 2 represents a general flow chart of the invention;
Figure 3 represents a diagram of the maximum capturing phase; and
Figure 4 represents the voltage gradient generated by the voltage generator of the present invention.

### DETAILED DESCRIPTION OF THE INVENTION

The device for the automatic measurement of the concentration of a developing agent according to the invention utilizes the voltamperometer principle. It is intended to operate with a three-electrode cell capable of being in contact with the developing bath containing the developing agent whose concentration is to be measured. The device enables measurement of the amperage output from the three-electrode cell according to the voltage applied to its terminals. The curve obtained has a peak and a step whose height is in proportion to the concentration of the developing agent.

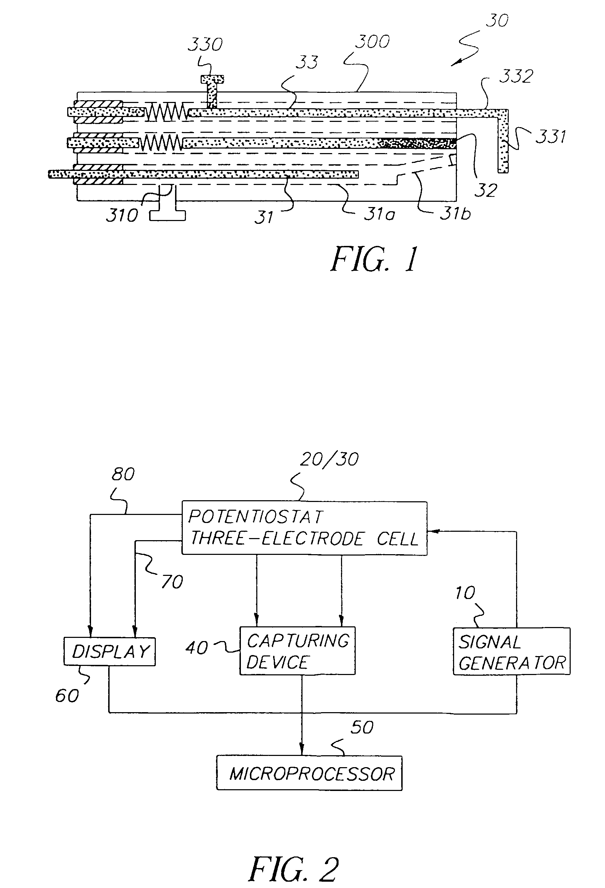

A three-electrode cell 30 utilized with the invention device, illustrated in Figure 1, comprises a reference electrode 31, an indicator electrode 32 and an auxiliary electrode 33. The three-electrode cell 30 can be integrated in the measuring device like the cell described in the French Patent Application FR 2776071. The three-electrode cell 30 is a compact cell that comprises a holder 300 having three locations, each location being designed to take a specific electrode 31, 32, 33. The holder 300 has the three electrodes 31, 32, 33 in fixed positions in relation to one another, the three electrodes opening at one end of the holder 300. The reference electrode 31 is arranged so that its end is as close as possible to the end of the indicator electrode 32 so that the potential at the end of these two electrodes is approximately the same. The distance between the ends of the reference electrode 31 and the indicator electrode 32 is for example in the order of one millimeter. The auxiliary electrode 33 is arranged so that the lines of current that flow between the indicator electrode 32 and the auxiliary electrode 33 are parallel and uniform. The auxiliary electrode 33 has for example an angled end 331, parallel to the surface of the end of the holder 300 where the three electrodes open out. A non-angled part 332 of the auxiliary electrode 33 is located outside the holder 300. The non-angled part 332 of the auxiliary electrode 33 located outside the holder 300 is electrically insulated in order to prevent disturbance in the current lines.

The reference electrode 31 comprises a silver chloride rod submerged in a solution of potassium chloride saturated in silver chloride. The location or cavity in the holder 300 provided to take the reference electrode 31 has a straight part 3 la wherein the silver rod is located, and an oblique part 31b comprising the end which approaches the end of the indicator electrode 32. The potassium chloride is added to the cavity through an orifice 310. The indicator electrode 32 can be made of platinum, gold or vitreous carbon. Preferably vitreous carbon will be selected. The auxiliary electrode 33 can be of any material so long as its electrochemical properties do not affect the performance of the relevant electrode. For example it can be stainless steel. A screw 330 is provided to attach the auxiliary electrode to the holder 300. The auxiliary electrode 33 can exceptionally be removed from the holder 300 by loosening the screw 330, particularly when the indicator electrode 32 has to be polished.

The holder 300 that has the three electrodes is made from an electrically insulating material that is photographically inert. For example Teflon® can be selected.

The three-electrode cell 30 can also be independent to be inserted in the device solely for a measurement. For example it can be a disposable three-electrode cell for single use produced by a technique based on serigraphy like the cell described in French Patent Application FR 2776071.

The measuring device whose general flow chart is illustrated in Figure 2 comprises a generator 10 capable of generating at least one voltage ramp provided to supply the three-electrode cell 30. A digital signal is generated and converted into an analog signal by a digital/analog converter. The analog signal is sent to the three-electrode cell 30 via a potentiostat 20. The voltage at the terminals of the three-electrode cell 30 thus increases in time. The potentiostat 20 enables a constant potential difference to be maintained across the indicator electrode 32 and the reference electrode 31 of the three-electrode cell 30. An analog/digital converter is provided to convert the analog signal recovered from the potentiostat output as a digital signal. The device also comprises a capturing device 40 for capturing the digital signal of the analog/digital converter, which is representative of the amperage at the terminals of the three-electrode cell 30. The capturing device 40 captures this signal at the potentiometer output. A microprocessor 50 is provided to compare the values captured by the capturing device 40 to each other. The microprocessor 50 is for example a general use microprocessor such as an Intel Pentium 80*86® or a Motorola, a microcontroller such as for example an Intel 8051® or a signal processor. The microprocessor 50 is also utilized to control the signal generator 10, that is it generates and calculates the increments of the voltage gradient.

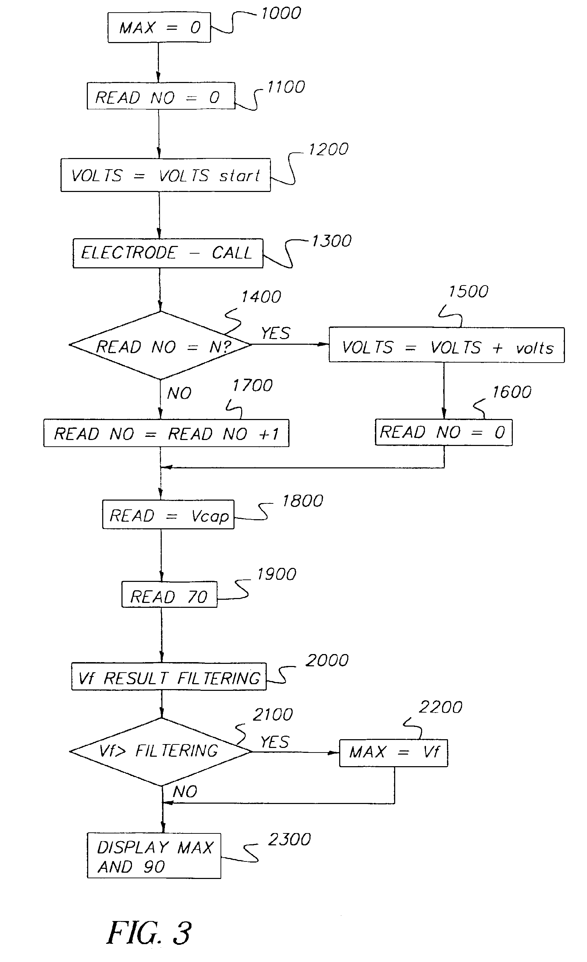

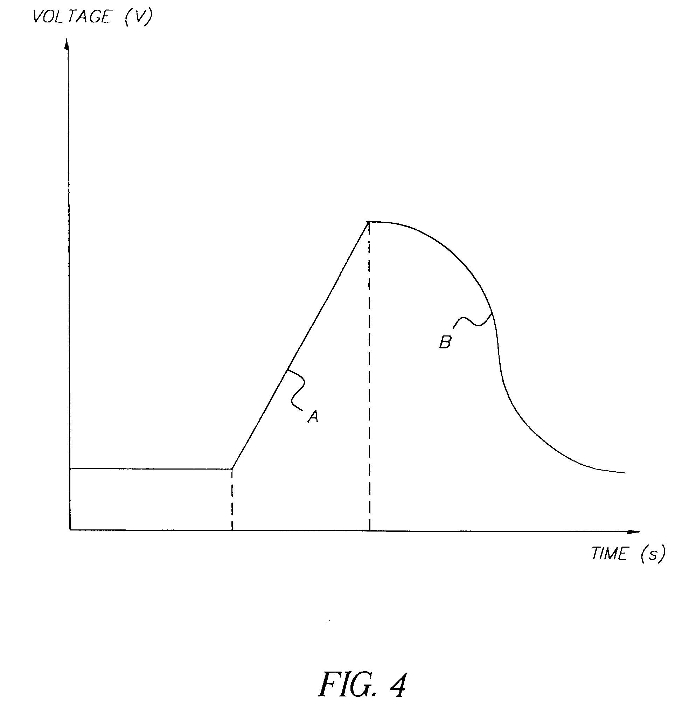

With reference to Figure 3, one can see the capture phase of the maximum of the signal representing the amperage at the terminals of the three-electrode cell according to the voltage applied to it. The signal generator 10 generates a triangular gradient as is shown in Figure 4, in part A. It will be shown below that the gradient generator can generate different shape gradients according to the phase of use of the device. At the start of use, the voltage VOLTS equals the voltage of the gradient start VOLTSₛₜₐᵣₜ (step 1200). The signal for the amperage measured in step 1300 by the indicator electrode 32 is sent to the capturing device 40. Advantageously, for the same value of voltage VOLTS of the voltage gradient generated by the generator 10, N values of the signal representing the amperage of the three-electrode cell are read in step 1400 using the capturing device 40, so that a stabilized value is obtained. For example 10 readings are carried out. A counter of the number of readings Read No, which contains the value zero at the start in step 1100, counts the number of values captured V_{cap} such that above the N^{th} value, the voltage VOLTS is increased in step 1500 by a certain voltage value *volts* corresponding to an LSB or increment of the digital/analog converter and the counter Read No is reset to zero in step 1600. At each reading, the counter is incremented in step 1700 using the microprocessor 50. The analog signal representative of the amperage measured at the terminals of the three-electrode cell is converted digitally by an analog/digital converter. The captured values V_{cap} using the capturing device 40 are read in step 1800. The microprocessor 50 then produces a signal coming from the digital filtering of the captured values V_{cap} so as to be free from high-frequency noise. This filtering also provides freedom from sudden variations of the signal generated by the generator 10. The filter utilized is a low-pass filter known to those skilled in the art. For each value captured V_{cap} by the capturing device, a filtered value V_{f} is obtained in step 2000. A memory is provided to record the maximum value MAX. This memory at the start contains the value zero in step 1000. Each filtered value V_{f} is compared in step 2100 with the value MAX. When a value V_{f} is more than the value MAX, it is recorded in its place in step 2200. These steps are repeated throughout the duration of the gradient and each filtered value V_{f} is compared with the maximum memorized value MAX. The maximum value recorded is shown in step 2300 on a display 60.

Advantageously, the device comprises a saturation indicator 70 provided to check that the values captured by the capturing device 40 are values that correctly represent the amperage at the terminals of the three-electrode cell. It sometimes occurs that the output signal that is recovered at the analog/digital converter output is not representative of the amperage measured at the indicator electrode 32. This happens when the range of possible values of the potentiostat 20 output does not cover the whole signal representing the amperage measured at the terminals of the three-electrode cell 30 according to the voltage applied to its terminals. In this case, it is not possible to determine to which value captured by the capturing device the signal peak corresponds. So long as the signal value is less than the maximum value that the potentiostat can take, the saturation indicator 70 will show an initial value, e.g. the value 1. When the signal value equals the maximum value, the saturation indicator 70 will show a second value, e.g. 0. Immediately after each reading of the output value of the analog/digital converter, the saturation indicator 70 is read in step 1900 which gives a value 1 or 0. For each maximum current value kept, a value 1 or 0 of the saturation indicator 70 is linked and is shown on the display 60 in step 2300. Thus, when at the end of measuring a maximum current value linked with a value 0 of the saturation indicator 70 exists, the maximum current value will be displayed and the operator will see that this value is saturated.

Advantageously, an operating indicator 80 (Fig. 2) is utilized. This indicator 80 is provided to optimize the operation of the device. In effect, when the device is powered up, the voltage generated at this moment is not that of the start of the voltage gradient but less. The starting program provides for conversion of the powering up voltage into the voltage value of the start of the gradient. If the user puts the electrodes in the bath before the end of this program's execution, the voltage applied to the electrode terminals will not be that of the start of the gradient and the values measured will be completely erroneous. Therefore an internal set point corresponding approximately to the value of the start of the gradient is provided. Thus, from powering up the device, the voltage generated is compared with a reference value. If the voltage from the digital/analog converter is more than or equal to this reference value, the voltage measured is sent to the potentiostat. A value, e.g. 1, is assigned to the operating indicator 80. This value is shown on the display 60 so as to warn the user that the device is in operating mode. If the value measured is less than this reference value, the internal set point is sent to the potentiostat. A value, e.g. 0, is assigned to the operating indicator 80. This value is displayed so that the user is informed that the device is not yet in operating mode.

Advantageously, when the electrodes are reinitialized after a measurement, the generator 10 generates a signal in sinusoidal semi-arch like that illustrated in Figure 4 in part B. This then prevents pulse currents in the electrodes and bath.

According to a particular utilization of the invention, the device is used to measure the concentration of ascorbic acid in developing baths. The measurement of the concentration of ascorbic acid enables bath replenishment to be controlled in order to obtain products of high quality and reduce the volume of waste. Clearly such a device can be used to measure the concentration of various developing agents whether for example black and white developing agents of the family of polyhydroxide aromatic compounds such as hydroquinone, monosulfate hydroquinone or color developing agents belonging to the phenylenediamines.

## Claims

1. A device for automatically measuring the concentration of a developing agent in a solution using a three-electrode cell (30), the device comprising:
a signal generator (10) capable of generating at least one voltage gradient intended to supply the three-electrode cell (30);
a capturing device (40) of the signal representative of the amperage measured at the terminals of the three-electrode cell (30) according to the voltage applied to its terminals;
a microprocessor (50) provided to compare successively one with another the values captured by the capturing device (40) throughout the duration of the gradient.

2. A device according to Claim 1, which further comprises a potentiostat (20) linked to the three-electrode cell (30).

3. A device according Claims 1 or 2 wherein the microprocessor (50) controls the signal generator (10) by generating and calculating the increments of the voltage gradient.

4. A device according to any one of Claims 1 to 3 wherein the microprocessor (50) digitally filters the values captured by the capturing device (40) to be free from the high-frequency noise and/or sudden variations of the signal generated by the generator (10).

5. A device according to any one of Claims 1 to 4, which further comprises a saturation indicator (70) provided to check that the values captured by the capturing device (40) are values to keep.

6. A device according to any one of Claims 1 to 5 which further comprises an operating indicator (80) provided to check that the device is in operating mode.

7. A device according to any one of Claims 1 to 6 which moreover comprises a display (60).

8. A device according to any one of Claims 1 to 7 wherein the signal generator (10) generates various types of gradients according to the phases of use of the device.

9. A device according to Claim 8 wherein the signal generator is capable of generating a triangular signal or a signal in sinusoidal semi-arch.

10. A device according to any one of the previous Claims wherein the three-electrode cell (30) comprises a reference electrode (31), an indicator electrode (32) and an auxiliary electrode (33), and a holder (300) comprising three locations, each location being designed to take one electrode determined so as to maintain the three electrodes in a fixed position on in relation to another.

11. A device according to Claim 10 wherein the holder (300) is made from an electrically insulating material that is photographically inert.

12. A device according to Claim 10 or 11 wherein the auxiliary electrode (33) has an angled end (331), a non-angled part (332) of the auxiliary electrode (33) located outside the holder (300) is electrically insulated so as to create parallel and uniform current lines between the indicator electrode (32) and the auxiliary electrode (33).

13. A device according to Claims 9 to 12 wherein an aperture (310) is provided in the location designed to take the reference electrode (31), the said aperture (310) being provided to introduce a solution constituting the reference electrode (31).

14. Utilization of the automatic measuring device according to any one of Claims 1 to 13 to measure the concentration of ascorbic acid.
